Europäisches Patentamt

(19) European Patent Office

Office européen des brevets

(11) Publication number: **0 619 083 A1**

(12) **EUROPEAN PATENT APPLICATION**

(21) Application number: **94302221.0**

(22) Date of filing: **28.03.94**

(51) Int. Cl.⁵: **A23L 1/317, A23L 1/314, A23L 1/105**

(30) Priority: **05.04.93 US 42941**

(43) Date of publication of application:
**12.10.94 Bulletin 94/41**

(84) Designated Contracting States:
**AT BE CH DE DK ES FR GB GR IE IT LI LU MC NL PT SE**

(71) Applicant: **RHONE-POULENC SPECIALTY CHEMICALS CO.**
**CN 7500, Cranbury**
**New Jersey 08512-7500 (US)**

(72) Inventor: **Jenkins, Ronald Kent**
**31 Robin Drive**
**Washington, PA 15301 (US)**

(74) Representative: **Smith, Sydney**
**Elkington and Fife**
**Prospect House**
**8 Pembroke Road**
**Sevenoaks, Kent TN13 1XR (GB)**

(54) **Reduced fat comminuted meat compositions.**

(57) A reduced fat comminuted meat composition comprising i) a cereal hydrolysate derived form amylase hydrolysis of cereal ; ii) oat bran ; iii) corn syrup solids ; and said comminuted meat.

## Background of the Invention

Recently, there has been an extensive emphasis on diet with the goal of reducing caloric and cholesterol intake. One of the major means of accomplishing this goal is the reduction of the intake of fat. Numerous fat mimetic products are known and many are available commercially. One such product is an oat based extract patented under U.S. Pat. Nos. 4,996,063 and 5,082,673 issued to G. Inglett; identified as Oatrim and sold by Rhone-Poulenc Inc. This product is the solids portion of the soluble fraction that remains after the partial hydrolysis of oat flour with $\alpha$-amylase enzyme. The product has a elevated content of $\beta$-glucan. In addition to acting as a fat mimic, the product also has the benefit of the known ability of oat soluble fiber and $\beta$-glucan to reduce cholesterol levels in the blood.

While Oatrim has been used in various food systems as a fat mimic or replacer, it has various limitations relative to the area of use. In particular, Oatrim has been added to various ground meat products in order to prepare a reduced fat meat patty or sausage. However, Oatrim by itself in meat products, while providing cook yields, provides a meat product that exhibits a weak or mushy texture. Oatrim as presently constituted cannot be used effectively as a fat mimetic because of these characteristics and conditions.

Recently, certain hydrocolloid/gum compositions have been prepared which provide good yield and texture when used in a fat reduced beef product; however, these hydrocolloid/gum containing meat products have been criticized as being dry and devoid of beef flavor. Because of these organoleptic shortcomings, sales of reduced fat meat products have been lagging.

It has now been discovered that certain Oatrim compositions can be prepared that, when used with comminuted meat offer improved handling, organoleptic qualities and economies over prior reduced fat meat products.

## Summary of the Invention

In accordance with the invention, water soluble and insoluble dietary fiber-containing compositions which are based on cereal hydrolysates are provided which are characterized by having good cook yields in comminuted meats as well as organoleptic characteristics comparable to the full fat product and also the benefits of $\beta$-glucan. The claimed compositions of this invention comprise 1) said cereal hydrolysate dietary fiber-containing material; 2) oat bran; 3) corn syrup solids; and 4) optionally torula yeast and can be mixed with food to effect a replacement of fat or other ingredients or act as a filler or flavor carrier or decoration. Particularly, the compositions can be used as fat mimics in combination with comminuted meats in such products as beef patties.

## Detailed Description of the Invention

As used herein, the term "Oatrim" is intended to specifically refer to the solids recovered from the water soluble fraction after separating the soluble fraction from the insoluble fraction by partial amylase hydrolysis of oat flour as defined herein.

Broadly, the term "oat hydrolysate" is intended to cover a) the solids from the soluble fraction prepared from oats as defined above, b) the insoluble fraction as defined above and c) the total solids obtained after the amylase hydrolysis of the cereal forming the soluble and insoluble fraction without isolation of the fractions.

The term "cereal hydrolysate" is intended to cover the same products as listed under the oat hydrolysate but prepared using the cereals as listed hereinafter.

Certain of the hydrolysates used in the invention, e.g., the soluble dietary fiber material, can be formed using the process of U.S. Patent Nos. 4,996,063 and 5,082,673, the disclosures of which are incorporated herein by reference.

Suitable substrates contemplated for use in preparing the hydrolysates used in the invention include cereal flours, milled cereal brans, cereal starches, tuber starches, and blends thereof. Of particular interest are the whole flours of barley, oats, wheat, corn, rice, rye, triticale, and milo, as well as the flours prepared from bran or other fractions of the milled grain. Preferably, the substrate is whole oat flour.

The substrate is slurried in a sufficient amount of water to give a concentration in the range of about 10-40% by weight. The water can contain a suitable calcium content in an amount sufficient to stabilize the subsequently added $\alpha$-amylase, such as about 25-50 part per million (ppm) of calcium. The slurried substrate may be gelatinized prior to enzymatic treatment, using any method known in the art such as heating. The pH of the ungelatinized slurry or the gelatinized dispersion can be adjusted to about 5.5-7.5, preferably about 6.0, with appropriate acid or base addition, i.e., sodium hydroxide or other alkali.

It is advantageous to use thermostable $\alpha$-amylase referred to as 1.4-$\alpha$-D-glucan glucanohydrolases and having the essential enzymatic characteristics of those produced by the Bacillus stearothermophilus strains ATCC Nos. 31, 195; 31,196; 31,197; 31,198; 31,199; and 31,783. These strains are described in U.S. Pat. No. 4,284,722 which is incorporated herein by reference. Other sources of this enzyme include organisms as B. subtilis which have been genetically modified to express the thermostable α-amylase of B. stearothermophilus as described in U.S. Pat. No. 4,493,893 incorporated herein by reference. These enzymes are available commercially under the name "G-zyme G995" (formerly called "Enzeco Thermolase"; Enzyme Development Div., Biddle Sawyer Corp., New York, N.Y.)

Other suitable α-amylases are those produced by B. licheniformis var. as described in U.S. Pat. Nos. 4,717,662 and 4,724,208, herein incorporated by reference. These enzymes are available commercially under the name "Taka-Therm L-340" (formerly called "Takalite" Solvay Enzyme Products, Inc., Elkart, Inc.). Of course, any α-amylase which is useful in the thinning of the starch is contemplated for use therein.

The conditions of enzyme treatment, including the enzyme concentration and the time and temperature of reaction, are selected to achieve liquefaction of the starch in the substrate. When using a thermostable α-amylase, a preferred treatment temperature is in the range of 70°-100°C., preferably about 95°C. At these temperatures, gelatinization of the starch in the substrate occurs concurrently with the hydrolysis. The duration of the treatment at the desired conversion temperature depends on the desired product properties and will generally range from about 2-60 minutes.

After completion of the enzymatic hydrolysis, the enzyme is inactivated, such as by passing the mixture through a steam injection pressure cooker at a temperature of about 140°C. Alternatively, the enzyme may be inactivated by acidification (pH 3.5-4.0) at 95°C. for about 10 min. A combination of these methods can also be used. Optional neutralization with alkali increases the salt concentration of the product and this could be less desirable. A natural pH product can be made by avoiding the acid enzyme inactivation step and relying solely on heat inactivation. After the enzyme has been inactivated, the soluble fraction comprising the soluble dietary fiber and the maltodextrins (maltooligosaccharides) is separated from the insoluble residue by any appropriate means such as by centrifugation of the hydrolysates. In a preferred embodiment of the invention, temperatures during centrifugation are maintained less than 70°C., and most preferably within the range of 5°-50°C. Under these conditions of separation, the levels of lipids and proteins in the dietary fiber products are significantly reduced. Water is then removed from the soluble fraction by any of a variety of conventional techniques, whereby the products of this invention comprising the dietary fiber and maltodextrins are recovered. The maltodextrins produced by the process of the invention have a D.E. of 20 or less. These maltodextrins are substantially water soluble at elevated temperatures (e.g., 70°-100°C.)

The soluble dietary fiber recovered from the centrifugate is principally in the form of β-glucans and pentosans. Of course the relative amount of each fiber type varies with the species of substrate. Oat and barley substrates yield mostly the β-glucans; whereas wheat, rice, and corn yield the pentosans.

The insoluble fraction recovered from the centrifuge can also be use though not as effectively as the soluble dietary fiber. If desired, the product from the hydrolysis step can be dried to recover both the soluble and insoluble solids. The benefit derived by this procedure is the use of all the components without loss or expense in disposing of the insoluble fraction.

Representative Method of Preparing Soluble Oat Fiber in Accordance with Example 10 of U.S. Patent No. 5,082,673

Six kilograms of oat flour can be slurred in 18 liters of water containing 25 ppm of calcium. The pH of the slurry was 5.75. After gelatinization by passage of the mixture through a steam injection cooker, the slurry can be collected in a 30 gallon (113.5 liter) steam-heated cooker. Alpha amylase can then be added to the slurry in an amount sufficient to provide 1 unit per gram of oat flour. After 5 minutes of stirring at 80°-90°C., the enzyme can be inactivated by passing the slurry through a steam injection cooker. The warm slurry can be centrifuged at 15,000 rpm by a large "Sharples" centrifuge to separate the soluble and insoluble components. The products can be dried separately on hot rolls. The oligomer composition can be 98% DP 9 and larger.

In general, the cereal hydrolysate is added to the comminuted meat in an amount ranging from about 0.5 to about 2%; preferably from about 0.75 to about 1.25%.

The oat bran is added to the comminuted meat in an amount of from about 0.5 to about 1.25%; preferably from about 0.75 to about 1.00%.

The corn syrup solids is added to the comminuted meat in an amount of from about 0.1 to about 0.75%; preferably from about 0.25 to about 0.5%.

Optionally, encapsulated salt can be added to the above cereal hydrolysate, oat bran, corn syrup solids and comminuted meat mixture in an amount of from about 0.1 to about 0.8%; preferably from about 0.35 to about 0.60%.

Other optional ingredients include i) from about 0.25 to about 1.0% of torula yeast as a beef-flavoring agent; ii) from about 0.1 to about 0.5% sodium hexametaphosphate for antioxidant protection; and iii) from about 0.1 to about 0.5% of Curavis - 350, a polyphosphate blend sold by Rhone-Poulenc Inc. Water is added to the comminuted meat blend in an amount as needed to provide the effect needed. In general, water can be used in an amount ranging from 2 to about 10%; preferably from about 4 to about 8% depending on the moisture content of the meat. All of the above weight percents are based on the total weight of the comminuted meat product blend.

As used herein, comminuted meat is intended to cover meat muscle which has been interrupted from its natural form such as by cutting, shredding, chopping, grinding, emulsifying and the like. The comminuted meat pieces preferably have a size of less than 2.5 centimeters (1 inch) and more preferably less than 0.6 centimeters (0.25 inch). Appropriate particle sizes for products such as patties and sausages are well known to the skilled artisan.

The comminuted meat may be derived from any usual meat source using any conventional recipe [such as from bovine (cow, bull, steer, calf), sheep (lamb and mutton), swine (pigs, hogs), wild game (elk, deer) and fowl (chicken, turkey, duck, goose)] and conventional preparation techniques such as disclosed in "Sausage and Processed Meats Manufacturing, Robert E. Rust, AMI Center for Continuing Education, American Meat Institute (1977), which is incorporated herein by reference.

The comminuted meat can also include conventional ingredients such as curing agents and preservatives, spices, and flavor accentuators, fillers, coloring, and the like. These can be illustrated by alkali metal chlorides, nitrites, nitrates, phosphates (pyro and poly), sorbates, benzoates, erythorbates, citrates and citric acid, sugar and sugar derivatives, cereal flour and cereal derivatives, spices and spice extracts, oleo resins, seasonings, flavors, curing adjuncts such as glutamic acid and GDL, fats, oils, modified fats and oils, solvents such as water, alcohol or glycerin, vitamins, amino acids, proteins (natural, hydrolyzed, modified, isolated), flavor enhancers such as MSG or soy sauce, smoke flavorings, coloring agents such as paprika, tomato pumice, beet extract, artificial colors as desired.

The comminuted meat products can be in the form of patties, sausage, cooked and fermented sausage (salami and pepperoni), frankfurters (hot dogs) and the like products made from chopped meat, spices, preservation agents (nitrites, erythorbates, phosphates) and the like either formed or in casings.

The following example is presented only to further illustrate the invention and is not inserted to limit the scope of the invention which is defined by the claims.

## Example

Sensory characteristics of two reduced fat (10%) beef patty formulations containing added water and a dry blend of Oatrim, oat bran, corn syrup solids, encapsulated salt with (LBT) and without torula yeast (LB) were compared to commercially (CB) and laboratory prepared (CON) beef patties containing a standard (20%) fat content. Trained sensory panelists (34) evaluated the patties using preference, acceptance level and intensity rating scales. It will be seen that the reduced fat LBT and the standard fat CB patties provided the highest acceptance level and preference scores for meat flavor, juiciness and overall quality. Meat flavor, juiciness and overall quality scores were not significantly different between the LB and LBT reduced fat treatments. of the 20% fat products, the CB product yielded significantly higher texture, flavor, juiciness, aftertaste and overall acceptability scores than the CON patties. LBT, LB and CB patties were similar in providing the highest meat flavor intensity ratings. All samples yielded low off-flavor perception ratings. Juiciness intensity ratings were significantly greater with the Oatrim-containing LB and LBT samples. Intensity and preference scores for the various texture/tenderness indices indicated that the reduced fat treatments, LB and LBT, provided a significantly finer and more tender cooked patty matrix than either of the CB and CON standard patty preparations. Distribution analysis of acceptance level scores showed that the LBT treatment received the highest proportion of acceptance for flavor strength, meat flavor, saltiness, tenderness and juiciness.

## Process

### 1. Raw Materials

**Lean Phase** - Three fresh, vacuum-packaged two-way chuck cuts were hand trimmed to remove excess fat cover and internal fat clods. The lean trimmings were then ground once through a 1/2 inch grinder plate using a mixer/grinder, vacuum-packaged in 5 pound units and placed into a -11.0° C freezer until one day prior to formulation preparation. To minimize thaw exudate losses, the lean was then placed into a 3.3° C cooler to temper to an internal temperature of approximately -2.2° C. The tempered lean was then blended with the other components of the design treatments (see Table 1).

Prior to freezing, random samplings of the lean ground meat were pooled and assayed for ash, protein and moisture analysis. A fat content (5.77%) was derived by subtracting the combined assay percentage of ash, moisture and protein from 100%.

**Fat Phase** - Fresh, vacuum-packaged (chub) pre-ground 75/25 beef trimmings were sampled for proximate content. As with the lean phase, the fat content (25.7%) was calculated by subtracting the combined yields of the moisture, protein and ash content from 100%. The trimmings were stored at -2.2° C prior to formulating.

2. Treatment Formulations

Two reduced fat treatments were formulated to contain 10% fat. Since the target product for quality comparison was the commercial burger preparation which contains approximately 20% fat, it was decided that a Control preparation containing 20% fat be prepared from our treatment meat components. Treatment batch sizes were 17.5 Kg. and the 20% fat Control batch size was 10 Kg. The formulations were as follows:

## Table 1

### Beef Patty Formulations - Percentages

| | Ingredient | Control | LB | LBT |
|---|---|---|---|---|
| | | | Treatment | |
| 1. | Beef Lean | 28.24 | 64.81 | 64.31 |
| 2. | Beef Trim | 71.76 | 24.44 | 24.24 |
| 3. | Water | X | 8.00 | 8.00 |
| 4. | Oatrim | X | 1.25 | 1.25 |
| 5. | Corn Syrup Solids | X | 0.35 | 0.35 |
| 6. | Coarse II Oat Bran* | X | 0.75 | 0.75 |
| 7. | Torula Yeast ** | X | X | 0.70 |
| 8. | Encapsulated Salt | X | 0.40 | 0.40 |

\* Quaker Coarse II, a trademark of the Quaker Oats Co.
\*\* Provesta's Torula Yeast

The Oatrim used in the following example was prepared by admixing at room temperature sufficient whole oat flour with water containing calcium to provide a slurry of about 25% solids by weight. The pH of the slurry is 6.2. Taka-term enzyme in the amount equivalent to 0.7 grams per kilogram of total solids was added. The enzymatic hydrolysis was allowed to proceed at 92 - 95° C for a retention time of 1.5 - 2 minutes. The pH was then adjusted to pH 4 with phosphoric acid and heated to 130° C for six minutes in order to inactivate the enzyme. The pH was then adjusted to 5.5 with caustic and the material was centrifuged to separate the insoluble solids from the mother liquor. The mother liquor was dried in a drum dryer to provide the Oatrim product which had a pH of 5.3, a viscosity of 58 centipose (5% solution using spindle #3) and a moisture content of 6.7%.

3. Mixing Procedures

The beef lean and trim were blended with the water and dry ingredients in a mixer/grinder for approximately 30 seconds. The mixture was then ground once through a 3/32 inch grinder plate. The ground formulations were then covered with plastic and placed briefly into a - 11.1 C freezer for purposes of tempering the meat blend to a temperature of -2.2° C. Such a product temperature improves the patty forming characteristics of the ground meat. The observation was made that the torula yeast-containing formulation (LBT) was tackier than that of the LB reduced fat formulation.

### 4. Patty Making

A Hollymatic 200 patty maker was used to form the patties. The patty forming cup size was 4 (per pound) / 1/2 inch (patty thickness). Patties were interleaved with patty papers and stacked in groups of 4 on trays. Plastic bags were then placed over each patty tray and fold-sealed. The trays were then placed into a -11.1° C freezer until needed for grilling or shipment to a Sensory Research Laboratory for subsequent grilling and evaluation by a trained sensory panel. The patties were packed in dry ice for shipment from the Protein Applications Laboratory to the Sensory facility. Frozen commercial patties were sent directly to the Sensory Lab for use as the target control. The thickness of the CB patties was only 3/8 inches as compared to the CON 1/2 inch thick preparations.

### 5. Grilling Procedures

The patties were grilled at 185° C for a total of 6 minutes with the patties being flipped at 2 minute intervals. A weighted sear was used to press each patty for 30 seconds per side during grilling. Precautions were taken to maintain a constant duration of time between cooking and presentation of the cooked products to the panelists.

### 6. Sensory Evaluations

Three different ranking scales were used: Preference (hedonic: 1-9 scaling); Acceptance Level (1-5 scaling with 3 being considered the optimum level of acceptance; and intensity of sensory response (0-100).

### 7. Statistical Analysis

Significant differences between treatment means were determined using Duncan's Multiple Range Test.

### Results and Discussion

### Preference Ratings

This hedonic rating scale ranges from 1-9 with 9 representing the maximum (i.e. "Like Extremely") preference rating. Results of the preference ratings are provided in Table 2. The highest preference scores for flavor, juiciness, aftertaste and overall acceptability were obtained with the reduced fat LBT treatment and the standard (fat) CB product. Although the LB preference scores for these quality traits were lower than that obtained with the LBT treatment, such differences were not statistically significant (P<0.10). Likewise, juiciness scores were not significantly different among the four patty treatment.

The commercially prepared, 20% fat CB product yielded significantly higher preference responses for texture, flavor, aftertaste, and overall acceptability than did the lab-prepared CON (20% fat) patties. Possible explanations for the differences between the two 20% fat products include the use of frozen meat to produce the CON patties, variation in meat block quality (i.e. animal-to-animal, meat cut sourcing, age, etc.), and difference in patty thickness (CB = 3/8 inch; CON = 1/2 inch). With grilling times being equal for all treatments, a difference in patty thickness would be expected to have an impact on the degree of cooked doneness, thus affecting the overall quality profile of the cooked product. Likewise, the quality of beef patties prepared from fresh beef would be expected to be different from that obtained from frozen beef.

### Acceptance Level

Acceptance level ratings are provided in Table 3. This particular rating scale which ranges from 1-5, portrays maximum acceptance (i.e., "Just About Right") at the scale midpoint (#3). There were no significant differences between treatments for meat flavor, juiciness or moisture level.

Significant differences were apparent with sale and tenderness levels. The torula yeast-containing LBT sample exhibited the highest salt acceptability rating response. Without knowing the exact composition of the torula yeast ingredient, an explanation for this level of salt acceptance cannot be given.

The highest tenderness (i.e. increasing toughness) score was yielded by the CON patties. The CON patties were perceived to be significantly tougher than the other treatments.

The LBT patties provided the highest concentration of maximum acceptance responses for all attributes including saltiness and texture.

Intensity Rating

Mean intensity ratings are provided in Table 1. Ranging from 0 to 100, this scale ranks, by an increasing function, the effect of various organoleptic attributes. The reduced fat treatments, LB and LBT, were significantly ($P<0.05$) more juicy than either of the 20% fat patty preparations. Meat flavor, off-flavor and greasiness scores were similar for the CB, LB and LBT patty treatments. The CON patties provided a significantly ($P<0.05$) greasier mouthfeel) than did the other treatments. The reduced fat LB and LBT patty treatments were considered significantly ($P<0.10$) finer in grind or particle definition than was either of the 20% fat products (CB, CON). Most tender (significance; $P<0.05$) of all patty treatments was the Oatrim and torula yeast-containing LBT treatment. The CB and LB samples were not significantly different in degree of tenderness. Such results indicate the addition of the torula yeast to the LB formulation has a softening effect on the cooked patty matrix.

Conclusions

The reduced fat treatment containing torula yeast, LBT, provided organoleptic responses equal to or greater than that of the commercially prepared, 20% fat CB beef patties. Flavor release, juiciness, meat flavor intensity, and overall acceptance of each of the reduced fat, Oatrim-containing (LB and LBT) treatments was similar. Although both the reduced fat treatments (LB and LBT) and the CON patties shared a common meat block source, the reduced fat treatments were judged to be superior in most organoleptic quality attributes to that of the standard fat (20%) CON preparation. The reduced fat formulations were judged to be more tender than either of the 20% fat products. Such a trait had little impact on the overall acceptability of either reduced fat formulation. Consequently, either of these two Oatrim-containing formulations would provide a highly acceptable, nutritious, reduced fat beef patty product.

## Table 2

**Preference Rating Means:** Beef Patties, Sensory Panel (n=34); Scale = 1 (dislike extremely) - 9 (like extremely).

| Quality Attribute | Preference Rating Means | | | | Duncan Confidence Interval % |
|---|---|---|---|---|---|
| | Treatments | | | | |
| | CB | LB | LBT | CON | |
| Texture | 6.9[a] | 6.2[b] | 6.4[b] | 6.2[b] | 95 |
| Flavor | 6.7[a] | 6.4[ab] | 6.6[a] | 6.1[b] | 95 |
| Juiciness | 7.1 | 6.8 | 7.0 | 6.7 | Nonsignificant |
| Aftertaste | 6.7[a] | 6.4[ab] | 6.4[ab] | 6.1[b] | 90 |
| Overall | 6.8[a] | 6.4[b] | 6.6[ab] | 6.2[b] | 90 |

[ab] For rows, values not sharing a common letter are different from each other at the indicated level.

Table 3

Acceptance Level Means:                 Beef Patties, Sensory Panel
                                        (n=34); Scale = 1 (too low) –
                                        5 (too high), 3 = "just about
                                        right".

| Quality Attribute | Acceptance Level Means | | | | Duncan Confidence Interval % |
| | Treatments | | | | |
| | CB | LB | LBT | CON | |
| --- | --- | --- | --- | --- | --- |
| Meat Flavor | 2.7 | 2.7 | 2.7 | 2.6 | Nonsignificant |
| Saltiness | $2.4^{bc}$ | $2.5^{b}$ | $2.8^{a}$ | $2.3^{c}$ | 95 |
| Tenderness | $3.1^{bc}$ | $3.1^{bc}$ | $2.9^{c}$ | $3.5^{a}$ | 90 |
| Juiciness | 3.1 | 3.2 | 3.2 | 3.2 | Nonsignificant |
| Moistness | 3.0 | 2.8 | 2.9 | 2.9 | Nonsignificant |

[abc] For rows, values not sharing a common letter are different

from each other at the indicated level.

## Table 4

**Intensity Rating Means:**      Beef Patties, Sensory Panel (n=34); Scale = 0 - 100.

| Quality Attribute | Intensity Rating Means | | | | Duncan Confidence Interval % |
|---|---|---|---|---|---|
| | Treatments | | | | |
| | CB | LB | LBT | CON | |
| Meat Flavor (0=none; 100=strong) | 57$^{ab}$ | 55$^{ab}$ | 58$^{a}$ | 50$^{b}$ | 95 |
| Off-Flavor (0=none; 100=strong) | 22 | 25 | 24 | 25 | Nonsignificant |
| Juiciness (0=not juicy; 100=very juicy) | 62$^{b}$ | 70$^{a}$ | 72$^{a}$ | 60$^{b}$ | 95 |
| Greasiness (0=not greasy; 100=very greasy) | 43$^{b}$ | 44$^{b}$ | 45$^{b}$ | 54$^{a}$ | 95 |
| Cooked (0=under; 100=over) | 51$^{ab}$ | 46$^{bc}$ | 42$^{c}$ | 52$^{a}$ | 95 |
| Tenderness (0=tender; 100=tough) | 36$^{b}$ | 31$^{b}$ | 22$^{c}$ | 51$^{a}$ | 95 |
| Texture (0=fine grind; 100=coarse) | 52$^{a}$ | 27$^{b}$ | 25$^{b}$ | 47$^{a}$ | 90 |

[abc] For rows, values not sharing a common letter are different from each other at the indicated level.

It is understood that the foregoing description is given merely by way of illustration and that modification and variation may be made therein without departing from the

## Claims

1. A cereal hydrolysate containing composition for use as a fat mimic in foods comprising:

   A. a cereal hydrolysate composition prepared by hydrolyzing an aqueous dispersion of a cereal substrate with an amylase enzyme under conditions which will hydrolyse the starch without appreciable solubilization of the substrate protein to yield a water soluble fraction, and a water insoluble fraction, and selected from the group consisting of a) said water soluble fraction, b) said water insoluble fraction, c) said water soluble dietary fiber solids isolated from said soluble fraction, and d) a combination of a) and b);

   B. oat bran; and

C. corn syrup solids;

all of the above in amounts which, when intimately mixed with food, are sufficient to provide a fat reduced product having the texture and mouthfeel comparable to a full fat product.

2. A composition as claimed in claim 1 characterized in that the cereal substrate dispersion is in the range of about 10-40% solids.

3. A composition as claimed in claim 1 or claim 2 characterized in that said cereal substrate comprises a flour selected from the group of oats, barley, wheat, corn, rice, rye, triticale, and milo from barley.

4. A comminuted meat composition containing a fat mimic comprising:

A. a cereal hydrolysate composition prepared by hydrolyzing an aqueous dispersion of a cereal substrate with an amylase enzyme under conditions which will hydrolyse the starch without appreciable solubilization of the substrate protein to yield a water soluble fraction, and a water insoluble fraction, and selected from the group consisting of a) said water soluble fraction, b) said water insoluble fraction, c) said water soluble dietary fiber solids isolated from said soluble fraction, and d) a combination of a) and b);

B. oat bran;

C. corn syrup solids; and

D. comminuted meat;

all of the above in amounts which, when intimately mixed with said comminuted meat, are sufficient to provide a fat reduced comminuted meat product having the texture and mouthfeel comparable to a full fat product.

5. A composition as claimed in claim 4 characterized in that the cereal hydrolysate is present from about 0.75 to about 1.25 weight percent based on the total weight of the composition.

6. A composition as claimed in claim 4 or claim 5 characterized in that the oat bran is present from about 0.5 to about 1.25 weight percent based on the total weight of the composition.

7. A composition as claimed in claim 5 or claim 6 characterized in that the corn syrup solids is present from about 0.1 to about 0.75 weight percent based on the total weight of the composition.

8. A composition as claimed in any of claims 5 to 7 characterized in that the composition additionally contains torula yeast from about 0.25 to about 1.0 weight percent based on the total weight of the composition.

9. A composition as claimed in any of claims 5 to 8 characterized in that the composition additionally contains encapsulated salt from about 0.1 to about 0.8 weight percent based on the total weight of the composition.

10. A comminuted meat composition comprising:

i) a dietary fiber product produced by the method of:

a. treating an aqueous dispersion of a cereal substrate with an a-amylase under conditions which will hydrolyze the substrate starch without appreciable solubilization of the substrate protein and thereby yield as soluble fraction and an insoluble fraction;

b. separating said soluble fraction from said insoluble fraction under conditions which minimize the level of protein in the soluble fraction;

c. recovering from said soluble fraction said water-soluble dietary fiber substantially free of water insoluble fiber;

ii) oat bran;

iii) corn syrup solids; and

iv) comminuted meat.

11. A composition as claimed in claim 10 characterized in that said cereal substrate comprises a flour selected from the group of oats, barley, wheat, corn, rice, rye, triticale, and milo.

12. A composition as claimed in claim 10 or claim 11 characterized in that said dietary fiber produced is Oa-trim.

European Patent Office

**EUROPEAN SEARCH REPORT**

Application Number

EP 94 30 2221

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| P,X | EP-A-0 577 294 (RHONE POULENC INC.)<br><br>* page 2; claims 1,3-5,8-12,18-20,22,23; examples 2-5 *<br>--- | 1-4,<br>10-12 | A23L1/317<br>A23L1/314<br>A23L1/105 |
| X<br>Y | EP-A-0 078 782 (MASKIN AB)<br>* claims 1,5-8; examples 1,3,5,6 *<br>--- | 1-4<br>1-9 | |
| X | FOOD TECHNOLOGY<br>no. 4 , 1992<br>pages 100 - 108 XP000278070<br>J. GIESE (ED.) 'DEVELOPING LOW-FAT MEAT PRODUCTS' | 10-12 | |
| Y | * page 103 - page 104 *<br>--- | 1-9 | |
| Y<br>A | WO-A-93 00829 (MONFORT INC.)<br>* page 3, paragraph 2; claims 1-4,7,8,21 *<br>* page 10 *<br>--- | 1-9<br>10-12 | |
| A | WO-A-93 00826 (R. BERGKVIST)<br>* page 2, paragraph 5; claims 1,2; example 3 *<br>* page 5, line 25 - page 6, line 23 *<br>--- | 1,3 | **TECHNICAL FIELDS SEARCHED (Int.Cl.5)**<br><br>A23L |
| X | EP-A-0 166 825 (WARNER-LAMBERT COMPANY)<br>* page 9 - page 12; claims 1,3,11-14 *<br>* page 13, line 31 - page 14, line 5 *<br>--- | 1 | |
| A | WO-A-91 19423 (KRAFT GENERAL FOODS)<br>* page 3 - page 4; claims 1,4,5; examples 1,5 *<br>--- | 1,3,4 | |
| A | US-A-4 865 863 (THE PROCTER & GAMBLE COMPANY)<br>* column 4, line 12 - line 20; claims 1,8,16; example 2 *<br>--- | 1,3,4,6 | |
| | -/-- | | |

The present search report has been drawn up for all claims

| Place of search | Date of completion of the search | Examiner |
|---|---|---|
| THE HAGUE | 15 June 1994 | Kanbier, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 94 30 2221

### DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | US-A-4 766 004 (WARNER-LAMBERT COMPANY) * column 7, line 27 - line 35; claims 1,8,11,20,22 * | 1,3,6,7 | |
| | | | TECHNICAL FIELDS SEARCHED (Int.Cl.5) |

The present search report has been drawn up for all claims

| Place of search | Date of completion of the search | Examiner |
|---|---|---|
| THE HAGUE | 15 June 1994 | Kanbier, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)